# EUROPEAN PATENT SPECIFICATION

(11) **EP 2 884 689 B1**
(45) Date of publication and mention of the grant of the patent: **14.10.2020**
(21) Application number: 14192674.1
(22) Date of filing: 11.11.2014
(51) Int. Cl.: H04L 9/08, H04L 9/06, G06F 7/58

(54) **Random data from GNSS signals and secure random value provisioning for secure software component implementations**
Zufallsdaten aus GNSS-Signalen und Bereitstellung eines sicheren Zufallswerts für sichere Softwarekomponentenimplementierungen
Données aléatoires de signaux GNSS et sécurisés d'approvisionnement d'une valeur aléatoire pour des implémentations de composant logiciel sécurisé

(30) Priority: 12.12.2013 US 201314104772
(43) Date of publication of application: 17.06.2015
(73) Proprietor: NXP B.V., 5656 AG Eindhoven (NL)
(72) Inventor: Teuwen, Philippe, 5656 AG Eindhoven (NL); Rombouts, Peter Maria Franciscus, 5656 AG Eindhoven (NL); Michaud, Frank, 5656 AG Eindhoven (NL)
(74) Representative: Krott, Michel

(56) References cited:
- EP-A1- 1 473 724
- WO-A1-2008/133590
- WO-A1-2013/101101
- WO-A2-2009/034504
- US-A1- 2010 332 574
- WESSON K ET AL: "Practical Cryptographic Civil GPS Signal Authentication", NAVIGATION, INSTITUTE OF NAVIGATION, FAIRFAX, VA, US, vol. 59, no. 3, 1 September 2012 (2012-09-01), pages 177-193, XP056000507, ISSN: 0028-1522
- KUHN M G: "An asymmetric security mechanism for navigation signals", LECTURE NOTES IN COMPUTER SCIENCE/COMPUTATIONAL SCIENCE > (EUROCRYPT )CHES 2008 (LNCS), SPRINGER VERLAG, DE, vol. 3200, 1 January 2004 (2004-01-01), pages 239-252, XP002436414, ISBN: 978-3-540-24128-7
- JONG-YEON PARK ET AL: "Methods for practical whitebox cryptography", INFORMATION AND COMMUNICATION TECHNOLOGY CONVERGENCE (ICTC), 2010 INTERNATIONAL CONFERENCE ON, IEEE, PISCATAWAY, NJ, USA, 17 November 2010 (2010-11-17), pages 474-479, XP031839944, DOI: 10.1109/ICTC.2010.5674789 ISBN: 978-1-4244-9806-2
- EASTLAKE D ET AL: "Randomness Requirements for Security (RFC 4086)", 20050601, 1 June 2005 (2005-06-01), XP015041913, ISSN: 0000-0003
- Peter Gutmann: "Testing Issues with OS-based Entropy Sources", NIST Random Number Generation Workshop, 1 January 2004 (2004-01-01), XP055213216, Retrieved from the Internet: URL:http://csrc.nist.gov/groups/ST/toolkit /documents/rng/TestingOSSources.pdf [retrieved on 2015-09-14]
- Anonymous: "Financial Cryptography: Hard Truths about the Hard Business of finding Hard Random Numbers", , 30 January 2014 (2014-01-30), XP055213230, Retrieved from the Internet: URL:http://financialcryptography.com/mt/ar chives/001471.html [retrieved on 2015-09-14]

## Description

### TECHNICAL FIELD

Various exemplary embodiments disclosed herein relate generally to the use of random values in secure software component implementations.

### BACKGROUND

The Internet provides users with convenient and ubiquitous access to digital content. Because the Internet is a powerful distribution channel, many user devices strive to directly access the Internet or to interoperate with a PC as a portal to the Internet. The user device may include, digital set top boxes, digital TVs, game consoles, PCs, digital music players, tables, and smart phones. The use of the Internet as a distribution medium for copyrighted content creates the compelling challenge to secure the interests of the content provider. Increasingly, user devices operate using a processor loaded with suitable software to render (playback) digital content, such as audio and/or video. Control of the playback software is one way to enforce the interests of the content owner including the terms and conditions under which the content may be used. Previously many user devices were closed systems. Today more and more platforms are partially open. In particular for the PC platform, some users may be assumed to have complete control over the hardware and software that provides access to the content and a large amount of time and resources to attack and bypass any content protection mechanisms. As a consequence, content providers must deliver content to legitimate users across a hostile network to a community where not all users or devices can be trusted.

Typically, digital rights management systems use an encryption technique based on block ciphers that process the data stream in blocks using a sequence of encryption/decryption steps, referred to as rounds. During each round, a round-specific function is performed. The round-specific function may be the same round function in round but each round uses a different round-specific sub-key. For many encryption systems, the round function may be specified using mapping tables or look-up tables. Frequently tables are used for different parts of the function for efficient execution in software of encryption/decryption functions. Look-up tables may be implemented that combine multiple functions of the round. Further, instead of distributing user-specific keys, user-specific algorithms that incorporate a user-specific key may be distributed instead of keys for encryption or decryption algorithms. These algorithms have to be obfuscated (hidden) in order to prevent redesign or prohibit obtaining the user-specific key. Accordingly, the encryption/decryption function may be carried out using tables accompanied with some computer code.

Content providers must deliver content to legitimate users across a hostile network to a community where not all users or devices can be trusted. This has lead to the development of white-box cryptography. In the white-box cryptography scenario it is assumed that the user has complete control of the hardware and software that provides access to the content, and an unlimited amount of time and resources to attack and bypass any content protection mechanisms. The software code that enforces the terms and conditions under which the content may be used must not be tampered with. The general approach in digital rights management for protected content distributed to PCs is to encrypt the digital content using for example, DES (Data Encryption Standard), AES (Advanced Encryption Standard), or using other known encryption schemes, and to use decryption keys to recover the digital content.

The two main areas of vulnerability of digital rights management relying on encryption are the software plug-ins which enforce the terms and conditions under which the content may be used, and the key distribution and handling. Typically, the plug-in enforces the terms and conditions under which the content is to be used. An attacker aiming to remove these terms and conditions may attempt to achieve this through tampering of the program code of the software plug-in.

Regarding key distribution, a media player has to retrieve a decryption key from a license database in order to play back the media. The media player then has to store this decryption key somewhere in memory for the decryption of the encrypted content. This leaves an attacker two options for an attack on the key. First, an attacker may reverse engineer the license database access function allowing the attacker to retrieve asset keys from all license databases. In this situation the attacker does not need to understand the internal working of the cryptographic function. Second, the attacker may observe accesses of the memory during content decryption, thus the attacker may retrieve the decryption key. In both cases the key is considered to be compromised.

Tamper-resistant software seeks to complicate tampering with the software. Various techniques for increasing the tamper resistance of software applications exist. Most of these techniques are based on hiding the embedded knowledge of the application by adding a veil of randomness and complexity in both the control and the data path of the software application. The idea behind this is that it becomes more difficult to extract information merely by code inspection. It is therefore more difficult to find the code that, for example, handles access and permission control of the application, and consequently to change it.

As used herein, white-box cryptography includes a secure software element that performs cryptographic functions in an environment where an attacker has complete control of the system running the white-box cryptography software. Thus, the attacker can modify inputs and outputs, track the operations of the software, sample and monitor memory used by the software at any time, and even modify the software. Accordingly, the cryptographic functions need to be carried out in a manner that prevents the disclosure of secret information used in the cryptographic functionality. Further, the cryptographic functions carried out by the white-box cryptography system are any type of cryptographic function, for example, encrypting/decrypting data using symmetric or asymmetric methods, executing hash functions, calculating digital signatures, performing key exchange protocols, performing authentication protocols, *etc.* White-box cryptography functions may be implemented in various ways. Such methods include: obscuring the software code: using complex mathematical functions that obscure the use of the secret information: using look-up tables: or any other methods that carry out cryptographic functions but hide the secret information needed for those cryptographic functions. Typically a white-box implementation will also contain components to bring anti-debugging and tamperproofing properties.

### SUMMARY

A brief summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various exemplary embodiments relate to a method for verifying the integrity of navigation data used to produce random values for a white-box cryptography system including: receiving information from a navigation system; verifying the integrity of the received navigation information; extracting random information from the received navigation information; and performing a white-box cryptography operation using the extracted random information.

Further, various exemplary embodiments relate to a white-box cryptography system for verifying the integrity of navigation data used to produce random values, including: a communication interface configured to receive navigation information and to communicate with an integrity device; a memory; and a processor in communication with the memory, the processor being configured to: receive information from a navigation system; verify the integrity of the received navigation information; extract random information from the received navigation information; and perform a white-box cryptography operation using the extracted random information.

Further, various exemplary embodiments relate to a method for determining that the random information samples used to produce random values for a white-box cryptography system have sufficient entropy, including: determining a number of random samples to initially collect; collecting the number of random samples from an external random number generator; calculating an estimate of the entropy of the collected random samples; encrypting or hashing the collected random samples using the white-box cryptography system and a secret key;; and performing a white-box cryptography operation using the encrypted collected random samples. In an example, the method further comprises after calculating the estimate of the entropy and before performing the white-box cryptography operation, determining that the calculated entropy exceeds a threshold. In that example, the method may further comprise that calculating the estimate of the entropy includes performing a plurality of entropy tests resulting in a plurality of entropy results, and that determining that the calculated entropy exceeds a threshold includes comparing the plurality of entropy results to a plurality of thresholds. In another example, the method may further comprise after calculating an estimate of the entropy and before performing the white-box cryptography operation, encrypting or hashing the collected random samples using the white-box cryptography system.

Further, various exemplary embodiments relate to a white-box cryptography system for determining that the random information samples used to produce random values for a white-box cryptography system have sufficient entropy, including: a communication interface configured to receive random samples from an external random number generator; a memory; and a processor in communication with the memory, the processor being configured to: determining a number of random samples to initially collect; collect the number of random samples from an external random number generator; calculate an estimate of the entropy of the collected random samples; encrypt or hash the collected random samples using the white-box cryptography system and a secret key; and perform a white-box cryptography operation using the encrypted collected random samples. In an example, the processor is further configured to after calculating the entropy, determine that the calculated entropy does not exceed a threshold and then discard the collected random samples and collect additional random samples from an external random number generator. In another example, the processor is further configured to after calculating the entropy and before performing the white-box cryptography operation, determine that the calculated entropy exceeds a threshold. In a further example, calculating the entropy includes performing a plurality of entropy tests resulting in a plurality of entropy results, and determining that the calculated entropy exceeds a threshold includes comparing the plurality of entropy results to a plurality of thresholds. In a further example, the system is used to encrypt or hash the collected random samples after calculating an estimate of the entropy and before performing the white-box cryptography operation.

### BRIEF DESCRIPTION OF THE DRAWINGS

In order to better understand various exemplary embodiments, reference is made to the accompanying drawings, wherein:
Fig. 1 illustrates a system including a user device implementing a white-box cryptography function using signals from a GNSS to generate random values for use in the white-box cryptography function;
Fig. 2 illustrates a method of verifying the integrity of GNSS data used to produce random values for a white-box cryptography application; and
Fig. 3 illustrates a method of determining that the information used to produce random values for a white-box cryptography application has sufficient entropy.

To facilitate understanding, identical reference numerals have been used to designate elements having substantially the same or similar structure and/or substantially the same or similar function.

### DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments. As used herein, the terms "context" and "context object" will be understood to be synonymous, unless otherwise indicated.

As discussed above white-box cryptography functions may require the use of randomness, for example to implement a cryptographic protocol. Software implemented on a processor by itself cannot produce the needed randomness as software running on a processor is deterministic. External sources of randomness may provide the needed randomness. For example, sampling a clock, sampling thermal noise in an electronic circuit, sampling computer or mouse inputs, sampling global navigation satellite system (GNSS) signals, *etc.* have all been used to provide randomness to processes running on a processor. The use of positioning signals from GNSS such as GPS, Galileo, GLONASS, *etc.* is especially attractive as a source of randomness. These GNSS provide a reliable signal across the whole earth or other large geographic area that may be freely used by widely available hardware. These GNSS also provide signals that may be used as a random data source or as the seed for a random number generator.

In a white-box cryptography scenario these GNSS may be used to provide randomness. But, an attacker may attempt to spoof the signals from the GNSS used to provide randomness to the white-box cryptographic system. In such conditions it may be very difficult to guarantee that the random sources used are not in control of the attacker.

GPS is one example of a GNSS. Each GPS satellite provides a signal providing a clock signal and the location of the satellite. A GPS receiver needs to receive signals from at least four satellites in order to provide an accurate position of the GPS receiver. At times a GPS receiver may receive signals from even more GPS satellites. The time and location signals for each satellite provide a source of random bits that may be used to generate random values in a desired range. Each of the various GPS signals received from each satellite may be used to generate random bits based upon the random nature of the least significant bits in these signals due to noise and other error sources. The length of time needed to generate bits for a random number depends on the number of bits needed and the rate at which bits can be extracted from the received GPS signals. Alternatively, the calculated location of the GPS receiver may produce values that may be used to produce random bits. While GPS is used as an example in the descriptions herein, other GNSS that produce signals with sufficient randomness may also be used. Other GNSS may include Galileo, globalnaya navigatsionnaya sputnikovaya sistema (GLONASS), BeiDou navigation satellite system, Compass navigation system, and Indian regional navigational satellite system (IRNSS).

Because GPS signals can be spoofed, counter-measures have been developed to guarantee positioning message integrity. Further, as GPS and other GNSS are being used in safety-critical and other situations with legal ramifications, the integrity of the data has become important. The European geostationary navigation overlay service (EGNOS) is a satellite based augmentation system developed by the European Space Agency. It is intended to supplement GPS, and potentially GLONASS and Galileo by providing integrity messages, corrections and additional ranging signals. A second approach to provide integrity information is foreseen within the current Galileo baseline integrity concept, which is intended to work on a global basis. Both concepts provide different information and use different methods to calculate the integrity measure. Other GNSS augmentation systems include wide area augmentation system (WAAS) in the United States, multi-functional satellite augmentation system (MSAS) in Japan, and GPS aided geo augmented navigation (GAGAN) in India.

Embodiments are described below that may make use of the new integrity features being deployed in GNSS such as SBAS+GPS (satellite based assurance system + GPS) or EGNOS in Galileo. These embodiments use GNSS messages as an entropy source. The integrity of the GNSS messages may be checked, either by the secure software component or a remote server if an encrypted copy is sent from a client. As an attacker cannot spoof the integrity-protected GNSS signals, this is a random source an attacker cannot tamper with. The embodiments described below may also use other integrity checks that may be added to and used by any positioning systems.

Another related issue with the use of a random source in white-box cryptography is the randomness of the source. When the randomness of these values is inadequate or in some cases when the confidentiality of these values is compromised this can lead to a breakdown in the security of the implemented cryptographic protocol. The generation of good random values should be non-deterministic and therefore may not be implemented in software only (*i.e*., it needs random inputs from a random hardware source or external interface). This means that either random values have to be provisioned securely into the white-box application or the white-box application should be provided with the input values from which it can derive random values itself.

Such randomness may be determined by evaluating the entropy of the random source as entropy is a measure of the uncertainty or unpredictability of an information source. Hence, it is desirable that the random source used by the white-box cryptography system have high entropy that ensures randomness of the random source in order to make attacks on the white-box cryptography system harder. Further, when the confidentiality of the random value is of importance, the random values should be encrypted or hashed with a secret key. In this case the white-box application may encrypt or decrypt or hash the random values with one of the keys (preferably a dedicated key) stored in and hidden by the white-box application. Below embodiments will be described relating to ensuring that a random source produces random data with sufficient entropy.

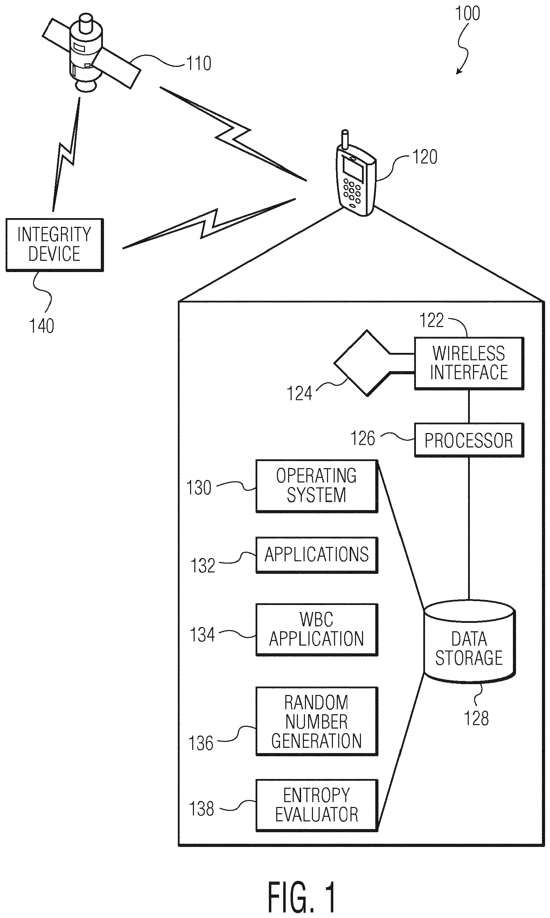

Fig. 1 illustrates a system including a user device implementing a white-box cryptography function using signals from a GNSS to generate random values for use in the white-box cryptography function. The system may include a navigation satellite 110, a user device 120, and integrity device 140. The navigation satellite 110 may be a GPS, GLONASS, Galileo, or other type of positioning satellite. The navigation satellite 110 transmits signals indicative of the of the position of the satellite at a precise time that may be used to determine the location of a user device 120 or other devices capable of receiving the navigation signals. Further, the navigation satellite 110 may transmit integrity signals received from the integrity device 140 that provide for improved location accuracy at the user device 120.

The integrity device 140 may receive navigation signals from the navigation satellite 140. The integrity device 140 may also store data transmitted by various navigation satellites to later verify the authenticity of the data transmitted by the navigation satellite. The integrity device 140 may use knowledge of its precise location to provide the navigation satellite 110 integrity information that may include correction information. As described above, the navigation satellite 110 may then transmit the integrity signals to the user device 120 to result in increased location accuracy.

The user device 120 may include a wireless interface 122, antenna system 124, processor 126, and data storage 126. The wireless interface 122 and antenna system 124 may be able to accommodate different wireless signals. For example, the antenna system 124 of the user device 120 may receive navigation signals from the navigation satellite 110 as well as communication signals from the integrity device 140. The wireless interface 122 may receive these different wireless signals and demodulate them and provide the data to the processor 126. The wireless connection between the user device 120 and the integrity device 140 may use cellular data protocols, WiFi, or other wireless networking technology. Further, the wireless connection between the user device 120 and the integrity device 140 may also include other wired network connections as is well known in the art. The received navigations signals from the navigation satellites may be processed to calculate a location of the user device 120. Further, the received integrity signals may also be processed to improve the accuracy of the calculated location of the user device 120.

The processor 126 controls the operation of the user device 120. The processor 126 may execute software instructions stored in the data storage 128. The data storage 128 may be any data storage used in conjunction with the processor 126 and may include both volatile and non-volatile storage including, for example, disk drives, optical drives, random access memory (RAM), flash memory, *etc.* The data storage may also store data (not shown) used by the user device 120 and its applications.

Various types of software instructions may be stored in the data storage 128, including for example, operating system 130, applications 132, WBC application 134, random number generation 136, and entropy evaluator 138. The operating system 130 may be any of numerous operating systems that may be implemented in the user device 120. The operating system may provide the user interface and provide various services such as running applications, accessing stored data, and controlling various hardware functions such as controlling the wireless interface 122. Applications 132 may be any applications installed on the user device 120 that may be run by the user of the user device 120.

The white-box cryptography (WBC) application 134 (as described above) may be an application designed to securely perform cryptographic functions such as decryption, encryption, digital signature, *etc*., and cryptographic protocols such as authentication, key agreement, *etc.* with a remote server, in spite of the fact that an attacker of the user device 120 may have complete control over the user device 120 including altering the WBC software, tracking each step of the WBC software, accessing memory during operation of the WBC software, *etc.* The WBC application may implement various cryptographic functions and protocols, some of which may require the use of random numbers. Such random numbers may be generated by the random number generator software 136 using the various navigation signals received from the navigation satellite 110 as described above. Further, the random number generator software 136 may seek to verify the authenticity of the navigation data used to generate the random numbers. This may be done by communicating with the integrity device 140 to compare the navigation data received by the WBC application 134 with the navigation data received and stored by the integrity device 140. Also, the timestamps of the data may be checked to determine that the data received is fresh data, *i.e*., is the data receive recent data. This is to prevent a replay attack by an attacker who may collect valid, but old navigation data and use it to generate desired random values. For example, if the timestamps and locations indicated by the navigation data received from the satellite do not match any timestamps and locations stored in the integrity device 140 or if the data is not fresh, then the navigation data may be rejected for use in generating random numbers, and such rejection may repeat until the attack is complete as indicated by the navigation data now being the same as that stored in the integrity device 140. Alternatively, the random number generator 136 may repeat rejecting data not authenticated for a specified number of iterations or for a specified amount of time. When such limits are reached the WBC software may cease to function. At this time the user of the user device 120 may be presented a notification that the WBC application has shut down due to problems with the random number generator. At that time the WBC may be shut down. The user may at some specified future time seek to attempt running the WBC application again.

The WBC application may be used to perform various cryptographic functions. For example, the WBC application may provide a secure environment for the use of digital rights management (DRM) software by decrypting encrypted media content. WBC may also be used to implement a digital signature protocol for use by the user equipment to digitally sign messages.

If the WBC application 134 needs to communicate with the integrity device 140 using a cryptographic protocol and a random value is needed, the WBC application may use an index or timestamp (or a list of indices or timestamps) to indicate the navigation data used to generate the random value. Accordingly, the integrity device 140 can generate the same random value as the WBC application 134 for use in the cryptographic protocol. This allows the WBC application to avoid explicitly sending the random value to the integrity device. This protocol is applicable with any other device or system that has access to the same navigation data used by the WBC.

The entropy evaluator 138 includes software instructions to evaluate the entropy of the random samples. The entropy evaluator 138 receives a number of random samples to be used by the WBC application. The entropy evaluator 138 then uses any of known methods to determine if the samples analyzed provide sufficient entropy as required by the WBC application. If not, then these samples are rejected and further samples obtained. If so, then the random samples are presented to the WBC application for use.

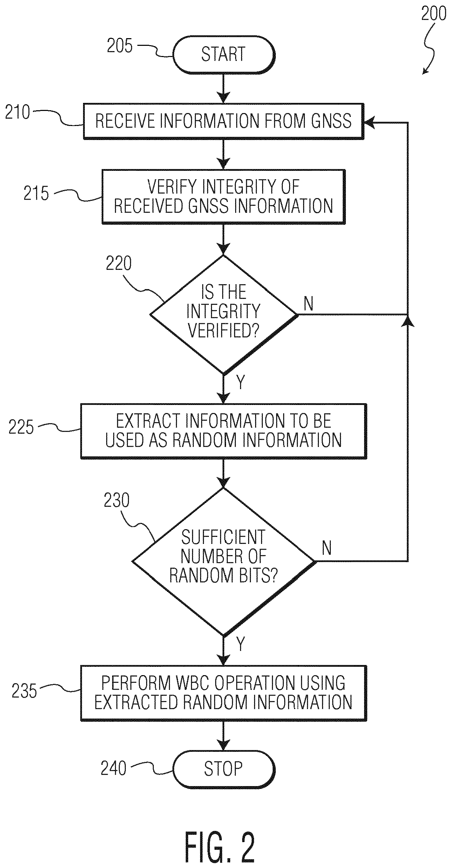

Fig. 2 illustrates a method of verifying the integrity of GNSS data used to produce random values for a white-box cryptography application. The method may begin at 205. The method 205 may be performed by the processor 126 in the user device 120. Also, this method 200 may be part of the white-box cryptography application 134 or may be a separate application. By way of example, in the following description, the method will be described as part of the white-box cryptography application 134. Next, the WBC application 134 may receive information from a GNSS 210. This information may be received directly from the GNSS using a receiver (such as would be found in the wireless interface 122) or indirectly from a co-located external source capable of providing the GNSS data to the user device 120. Such information may include timestamp information, satellite location information, and integrity information. The WBC application 134 may use some or all of this information to generate random bits. Also, information may be received from multiple satellites within the GNSS. Then the WBC application 134 may verify the integrity of the received GNSS data 215. In one example, this may be done by comparing the received GNSS data with data stored on an integrity device. Received time stamps, location data, and integrity data may be compared. Next, the WBC application 134 may determine if the integrity of the received information is verified 220. If so, then the received data may be used to generate random bits. If not, then the data is rejected. Also, the method 200 may track when the integrity of the GNSS data cannot be verified. If the data cannot be verified for a set period of time or if the rate of data verification drops too low, then the method may stop and provide notification that there is a problem verifying the GNSS data, so that the problem can be addressed. If the data is rejected, the method 200 may return to step 210. If the received GNSS data comes from an external source and the user device 120 includes its own GNSS receiver, the position data received by the GNSS receiver may be compared to the data received from the external source.

Once the received data is verified, the WBC application 134 may extract specific information from the received information to produce random bits 225. This may be accomplished in any manner and many methods are known in the art. Also, it is possible that step 225 may be performed before step 215.

Next, the WBC application determines if a sufficient number of random bits has been generated 230. If not, then the method returns to step 210 to obtain more GNSS information in order to generate more bits. If so, then the WBC application may perform an operation using the extracted random information 235. The method 200 then ends at 240.

The method 200 may be performed using a processor such as processor 126 running software program instructions. Also, the method 200 may be implemented using dedicated hardware such as an application specific integrated circuit (ASIC). Further, steps of the method 200 may be performed in a different order or some steps may be performed in parallel.

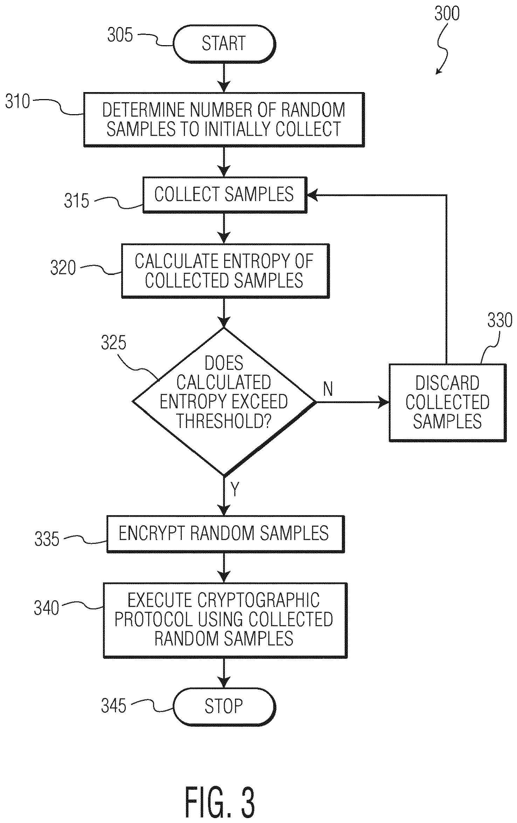

Fig. 3 illustrates a method of determining that the information used to produce random values for a white-box cryptography application has sufficient entropy. The method 300 may be carried out by the entropy evaluator 138. Also, the entropy evaluator may be a part of the WBC application 134. The method 300 begins at 305. The entropy evaluator 138 may first determine the number of samples to initially collect 310. Various entropy methods require a number of samples in order to determine the entropy of a data source. Also, the number of data samples needed may vary depending upon the desired level of entropy. Accordingly, the initial number of data samples to collect and analyze may be based upon these and other factors.

Next, the random number generation software 136 may collect the random samples for evaluation 315. Next, the entropy evaluator 138 may calculate an estimate of the entropy of the collected samples 320. The entropy evaluator 138 may user various known entropy calculation tests. The calculated entropy estimate may be compared to a desired entropy threshold or thresholds, if a number of entropy tests are done. If the calculated entropy for the samples does not meet the desired entropy, then the collected samples are discarded 330 and the method 300 returns to collect more samples 315. If the calculated entropy for the samples does meet the desired entropy, then the random samples may be encrypted to avoid tampering by a potential attacker 335. The encryption of the samples may be carried out by the WBC application 134 in order to prevent the attacker from exploiting knowledge of the random values. The WBC application 134 may then use the encrypted random samples to execute a cryptographic protocol requiring random information 340. The method 300 may then stop at 345.

While above a source of random information using GNSS signals is disclosed, the entropy evaluator 138 may be used to evaluate any source of random information. Such sources of random information may include various cryptographically secure random number generators (CSRNGs). CSRNG typically rely upon random physical phenomena in order to generate random numbers.

The method 300 may be performed using a processor such as processor 126 running software program instructions. Also, the method 300 may be implemented using dedicated hardware such as an application specific integrated circuit (ASIC). Further, steps of the method may be performed in a different order or some steps may be performed in parallel.

It should be noted that various aspects of the above embodiments may be combined resulting in other embodiments. Also, various steps in the methods may be performed in a different order or simultaneously. Also various aspects of the embodiments above may be implemented using processors and computer instructions to result in a specific machine implementing the embodiment. Also, portions of the embodiments above may be implemented using ASICs or other specific hardware elements.

As used herein, the term "processor" will be understood to encompass a variety of devices such as microprocessors, field-programmable gate arrays (FPGAs), application-specific integrated circuits (ASICs), and other similar processing and computing devices.

While the use of GNSS systems as a source of random information is disclosed above, other positioning systems that are not satellite based may be used in the embodiments described above. For example, ground based or airborne positioning systems may become widely deployed and may provide an adequate source of random information. Further, if the integrity of such data can be independently verified such as is the case for the GNSS data described above, these systems may provide a source of random information that can detect if an attacker has tried to spoof the random information.

It should be appreciated by those skilled in the art that any block diagrams herein represent conceptual views of illustrative circuitry embodying the principles of the invention.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the scope of the invention. Accordingly, the foregoing disclosure, description, and figures are for illustrative purposes only and do not in any way limit the invention, which is defined only by the claims.

## Claims

1. A method (200) for using random values for use in a white-box cryptography system comprising the steps of:
- receiving (210) navigation information from a navigation system, the navigation information received from the navigation system including integrity data that improves the accuracy of the navigation data;
- verifying (215) the integrity of the received navigation information;
- extracting (225) random information from the received navigation information, which includes processing the received navigation information to determine a position of the white-box cryptography system and extracting random information from the processed navigation information;
calculating (320) an estimate of the entropy of the extracted random information; and if the calculated entropy exceeds a threshold
- performing (235, 335) a white-box cryptography operation using the extracted random information, or if the calculated entropy does not exceed a threshold
- discarding (330) the received navigation information and collecting additional navigation information and repeating calculating (320) an estimate of the entropy of the extracted random information,
,wherein verifying (215) the integrity of the received navigation information includes communicating with an integrity device (140) to compare the navigation information received from the navigation system with navigation data received and stored by the integrity device.

2. The method of claim 1, wherein the integrity data is one of European geostationary navigation overlay service (EGNOS), wide area augmentation system (WAAS), multi-functional satellite augmentation system (MSAS), and GPS aided geo augmented navigation (GAGAN).

3. The method (200) of any preceding claim, wherein the navigation system is one of the following global navigation satellite systems: global positioning system (GPS), Galileo, globalnaya navigatsionnaya sputnikovaya sistema (GLONASS), BeiDou navigation satellite system, Compass navigation system, and Indian regional navigational satellite system (IRNSS).

4. A white-box cryptography system (100) comprising:
- a communication interface configured to receive navigation information and to communicate with an integrity device (140);
- a memory (128); and
- a processor (126) in communication with the memory, the processor (126) being **characterized in that** the processor (126) is configured to:
- receive navigation information from a navigation system (100), the navigation information received from the navigation system including integrity data that improves the accuracy of the navigation data;
- verify the integrity of the received navigation information, including communicating with an integrity device (140) to compare the navigation information received from the navigation system with navigation data received and stored by the integrity device;
- extract random information from the received navigation information, which includes processing the received navigation information to determine a position of the white-box cryptography system and extracting random information from the processed navigation information;
- calculate an estimate of the entropy of the extracted random information; and if the calculated entropy exceeds a threshold
- perform a white-box cryptography operation using the extracted random information, or if the calculated entropy does not exceed a threshold
- discarding (330) the received navigation information and collecting additional navigation information and repeating calculating (320) an estimate of the entropy of the extracted random information.

5. The system (100) of claim 4, wherein the integrity data is one of European geostationary navigation overlay service (EGNOS), wide area augmentation system (WAAS), multi-functional satellite augmentation system (MSAS), and GPS aided geo augmented navigation (GAGAN).

6. The system (100) of any one of claims 4 or 5, wherein the navigation system is one of the following global navigation satellite systems: global positioning system (GPS), Galileo, globalnaya navigatsionnaya sputnikovaya sistema (GLONASS), BeiDou navigation satellite system, Compass navigation system, and Indian regional navigational satellite system (IRNSS).

## Patentansprüche

1. Verfahren (200) zum Verwenden von zufälligen Werten für die Verwendung in einem "White-Box"-Kryptographiesystem, das die folgenden Schritte umfasst:
- Empfangen (210) von Navigationsinformationen von einem Navigationssystem, wobei die von dem Navigationssystem empfangenen Navigationsinformationen Integritätsdaten enthalten, die die Genauigkeit der Navigationsdaten verbessern;
- Überprüfen (215) der Integrität der empfangenen Navigationsinformationen;
- Extrahieren (225) von zufälligen Informationen aus den empfangenen Navigationsinformationen, das das Verarbeiten der empfangenen Navigationsinformationen, um eine Position des "White-Box"-Kryptographiesystems zu bestimmen, und Extrahieren von zufälligen Informationen aus den verarbeiteten Navigationsinformationen enthält;
Berechnen (320) einer Schätzung der Entropie der extrahierten zufälligen Informationen; und dann, wenn die berechnete Entropie einen Schwellenwert überschreitet:
- Ausführen (235, 335) eines "White-Box"-Kryptographieverfahrens unter Verwendung der extrahierten zufälligen Informationen oder dann, wenn die berechnete Entropie keinen Schwellenwert überschreitet:
- Verwerfen (330) der empfangenen Navigationsinformationen und Sammeln zusätzlicher Navigationsinformationen und Wiederholen des Berechnens (320) einer Schätzung der Entropie der extrahierten zufälligen Informationen,
wobei das Überprüfen (215) der Integrität der empfangenen Navigationsinformationen enthält, mit einer Integritätsvorrichtung (140) zu kommunizieren, um die von dem Navigationssystem empfangenen Navigationsinformationen mit durch die Integritätsvorrichtung empfangenen und gespeicherten Navigationsinformationen zu vergleichen.

2. Verfahren nach Anspruch 1, wobei die Integritätsdaten eine von "European geostationary navigation overlay service" (EGNOS), "Wide area augmentation system" (WAAS), "Multi-functional satellite augmentation system" (MSAS) und "GPS aided geo augmented navigation" (GAGAN) sind.

3. Verfahren (200) nach einem vorhergehenden Anspruch, wobei das Navigationssystem eines der folgenden globalen Navigationssatellitensysteme ist: "Global positioning system" (GPS), Galileo, "Globalnaya navigatsionnaya sputnikovaya sistema" (GLONASS), BeiDou-Navigationssatellitensystem, Compass-Navigationssystem und "Indian regional navigational satellite system" (IRNSS) .

4. "White-Box"-Kryptographiesystem (100), das Folgendes umfasst:
- eine Kommunikationsschnittstelle, die konfiguriert ist, Navigationsinformationen zu empfangen und mit einer Integritätsvorrichtung (140) zu kommunizieren;
- einen Speicher (128); und
- einen Prozessor (126) in Kommunikation mit dem Speicher, wobei der Prozessor (126) **dadurch gekennzeichnet ist, dass** der Prozessor (126) konfiguriert ist zum:
- Empfangen von Navigationsinformationen von einem Navigationssystem (100), wobei die von dem Navigationssystem empfangenen Navigationsinformationen Integritätsdaten enthalten, die die Genauigkeit der Navigationsdaten verbessern;
- Überprüfen der Integrität der empfangenen Navigationsinformationen, das enthält, mit einer Integritätsvorrichtung (140) zu kommunizieren, um die von dem Navigationssystem empfangenen Navigationsinformationen mit durch die Integritätsvorrichtung empfangenen und gespeicherten Navigationsinformationen zu vergleichen;
- Extrahieren von zufälligen Informationen aus den empfangenen Navigationsinformationen, das das Verarbeiten der empfangenen Navigationsinformationen, um eine Position des "White-Box"-Kryptographiesystems zu bestimmen, und das Extrahieren von zufälligen Informationen aus den verarbeiteten Navigationsinformationen enthält;
- Berechnen einer Schätzung der Entropie der extrahierten zufälligen Informationen; und dann, wenn die berechnete Entropie einen Schwellenwert überschreitet:
- Ausführen eines "White-Box"-Kryptographieverfahrens unter Verwendung der extrahierten zufälligen Informationen oder dann, wenn die berechnete Entropie keinen Schwellenwert überschreitet:
- Verwerfen (330) der empfangenen Navigationsinformationen und Sammeln zusätzlicher Navigationsinformationen und Wiederholen des Berechnens (320) einer Schätzung der Entropie der extrahierten zufälligen Informationen.

5. System (100) nach Anspruch 4, wobei die Integritätsdaten eine von "European geostationary navigation overlay service" (EGNOS), "Wide area augmentation system" (WAAS), "Multi-functional satellite augmentation system" (MSAS) und "GPS aided geo augmented navigation" (GAGAN) sind.

6. System (100) nach einem der Ansprüche 4 oder 5, wobei das Navigationssystem eines der folgenden globalen Navigationssatellitensysteme ist: "Global positioning system" (GPS), Galileo, "Globalnaya navigatsionnaya sputnikovaya sistema" (GLONASS), BeiDou-Navigationssatellitensystem, Compass-Navigationssystem und "Indian regional navigation satellite system" (IRNSS).

## Revendications

1. Procédé (200) d'utilisation de valeurs aléatoires pour une utilisation dans un système de cryptographie en boîte blanche comprenant les étapes :
- de réception (210) d'informations de navigation en provenance d'un système de navigation, les informations de navigation reçues en provenance du système de navigation incluant des données d'intégrité qui améliorent la précision des données de navigation ;
- de vérification (215) de l'intégrité des informations de navigation reçues ;
- d'extraction (225) d'informations aléatoires à partir des informations de navigation reçues ce qui inclut le traitement des informations de navigation reçues afin de déterminer une position du système de cryptographie en boîte blanche et l'extraction d'informations aléatoires à partir des informations de navigation traitées ;
- de calcul (320) d'une estimation de l'entropie des informations aléatoires extraites ; et si l'entropie calculée dépasse un seuil
- de réalisation (235, 335) d'une opération de cryptographie en boîte blanche en utilisant les informations aléatoires extraites, ou si l'entropie calculée ne dépasse pas un seuil
- de rejet (330) des informations de navigation reçues et de collecte d'informations de navigation additionnelles et de répétition du calcul (320) d'une estimation de l'entropie des informations aléatoires extraites,
dans lequel la vérification (215) de l'intégrité des informations de navigation reçues inclut la communication avec un dispositif d'intégrité (140) afin de comparer les informations de navigation reçues en provenance du système de navigation avec des données de navigation reçues et stockées par le dispositif d'intégrité.

2. Procédé de la revendication 1, dans lequel les données d'intégrité sont un élément parmi le service européen de navigation par recouvrement géostationnaire (EGNOS), le système de renforcement à large zone de couverture (WAAS), le système plurifonctionnel de renforcement par satellites (MSAS), et la navigation renforcée géo assistée par GPS (GAGAN).

3. Procédé (200) d'une quelconque revendication précédente, dans lequel le système de navigation est l'un des systèmes de navigation globaux par satellites suivants : système de positionnement mondial (GPS), Galileo, globalnaya navigatsionnaya sputnikovaya sistema (GLONASS), système de navigation par satellites BeiDou, système de navigation Compass, et système indien de navigation régionale par satellites (IRNSS).

4. Système de cryptographie en boîte blanche (100) comprenant :
- une interface de communication configurée pour recevoir des informations de navigation et pour communiquer avec un dispositif d'intégrité (140) ;
- une mémoire (128) ; et
- un processeur (126) en communication avec la mémoire, le processeur (126) étant **caractérisé en ce que** le processeur (126) est configuré pour :
- recevoir des informations de navigation en provenance d'un système de navigation (100), les informations de navigation reçues en provenance du système de navigation incluant des données d'intégrité qui améliorent la précision des données de navigation ;
- vérifier l'intégrité des informations de navigation reçues, incluant la communication avec un dispositif d'intégrité (140) afin de comparer les informations de navigation reçues en provenance du système de navigation avec des données de navigation reçues et stockées par le dispositif d'intégrité ;
- extraire des informations aléatoires à partir des informations de navigation reçues, ce qui inclut le traitement des informations de navigation reçues afin de déterminer une position du système de cryptographie en boîte blanche et l'extraction d'informations aléatoires à partir des informations de navigation traitées ;
- calculer une estimation de l'entropie des informations aléatoires extraites ; et si l'entropie calculée dépasse un seuil
- réaliser une opération de cryptographie en boîte blanche en utilisant les informations aléatoires extraites, ou si l'entropie calculée ne dépasse pas un seuil
- rejeter (330) les informations de navigation reçues et collecter des informations de navigation additionnelles et répéter le calcul (320) d'une estimation de l'entropie des informations aléatoires extraites.

5. Système (100) de la revendication 4, dans lequel les données d'intégrité sont un élément parmi le service européen de navigation par recouvrement géostationnaire (EGNOS), le système de renforcement à large zone de couverture (WAAS), le système plurifonctionnel de renforcement par satellites (MSAS), et la navigation renforcée géo assistée par GPS (GAGAN).

6. Système (100) de n'importe laquelle des revendications 4 ou 5, dans lequel le système de navigation est l'un des systèmes de navigation globaux par satellites suivants : système de positionnement mondial (GPS), Galileo, globalnaya navigatsionnaya sputnikovaya sistema (GLONASS), système de navigation par satellites BeiDou, système de navigation Compass, et système indien de navigation régionale par satellites (IRNSS).
